**Europäisches Patentamt**

**European Patent Office**

**Office européen des brevets**

(19)

(11) Veröffentlichungsnummer: **0 306 719**
**B1**

(12)

# EUROPÄISCHE PATENTSCHRIFT

(45) Veröffentlichungstag der Patentschrift:
31.10.90

(51) Int. Cl.⁵: **B65G 45/00**

(21) Anmeldenummer: **88112962.1**

(22) Anmeldetag: **10.08.88**

(54) Vorrichtung zum Abschaben fester Stoffe von einem Transportband.

(30) Priorität: **27.08.87 DE 3728580**

(43) Veröffentlichungstag der Anmeldung:
**15.03.89 Patentblatt 89/11**

(45) Bekanntmachung des Hinweises auf die Patenterteilung:
**31.10.90 Patentblatt 90/44**

(84) Benannte Vertragsstaaten:
**AT BE CH DE ES FR GB GR IT LI NL SE**

(56) Entgegenhaltungen:
**FR-A- 2 226 338**
**GB-A- 2 143 792**

(73) Patentinhaber: **Henkel Kommanditgesellschaft auf Aktien, Postfach 1100 Henkelstrasse 67, D-4000 Düsseldorf-Holthausen(DE)**

(72) Erfinder: **Hourticolon, Roland, Dipl.-Ing., Metzholz 21, D-5672 Leichlingen 1(DE)**
Erfinder: **Klöttschen, Hermann, Ostwaldstrasse 22, D-4000 Düsseldorf 13(DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1(DE)**

## Beschreibung

Die Erfindung betrifft eine Vorrichtung zum Abschaben fester Stoffe von einem Transportband mit einem aus einer Mehrzahl von nebeneinander in einem Messerhalter angeordneten, am Transportband mit veränderbarem Liniendruck anlegbaren Teilmessern gebildeten Schabmesser, wobei im Messerhalter für jedes drehbar gelagerte Teilmesser wenigstens ein auf dieses einwirkendes elastisches, federförmiges Zwischenglied mit Andrückschraube zur Einstellung des jeweiligen Teilmessers gegenüber dem Transportband angeordnet ist.

Eine solche Vorrichtung ist aus der FR-A 2 226 338 bekannt, bei der die einzelnen Teilmesser an einem in Querrichtung des Transportbandes verlaufenden und am Traggerüst des Transportbandes bewegbar gelagerten und verstellbar gewichtsbelasteten Träger auslenkbar angeordnet sind, wobei der Träger in einer Parallelführung gehalten ist und die Teilmesser auf dem Träger jeweils um eine definierte Schwenkachse auslenkbar sind, die in Transportband-Laufrichtung gesehen in einem ersten Abstand vor der Schneidkante und auf der Seite sowie in einem zweiten Abstand an der zu reinigenden Transportbandseite liegt, der ein Mehrfaches vom ersten Abstand beträgt. Mit dieser aufwendigen Konstruktion soll eine hohe gleichbleibende Abstreifleistung erreicht werden in Verbindung mit einer maximalen Schonung des Transportbandes, insbesondere unter Ausschaltung jeglicher Gefahr des Festhakens der Schneidstücke am Transportband.

Eine ähnliche Vorrichtung ist aus der DE-A 3 624 623 bekannt. Bei dieser Vorrichtung wird eine über der Transportbandbreite gleichmäßige Anpressung aller Teilmesser an das Transportband durch eine sehr aufwendige Konstruktion erreicht. Diese Konstruktion besteht aus einem Messerhalter, in dem für jedes Teilmesser eine eigene Lagerung angeordnet ist, welche jeweils aus einem von einer Druckmittelquelle versorgten ausdehnbaren Druckorgan, einem damit verbundenen elastischen Zwischengelenk, einem Hebel und einer elastischen Messerbefestigung besteht. Bei dieser Vorrichtung ist zwar gewährleistet, daß auch bei Abrieb einzelner Teilmesser in bestimmten Grenzen eine automatische Nachstellung der Teilmesser ohne manuelles Eingreifen erfolgt, diese Funktion wird aber nur mit Hilfe der sehr aufwendigen Messerlagerung erreicht, welche in den meisten Anwendungsfällen zu teuer oder auch unpraktikabel ist, da zur Funktion der Vorrichtung ein Druckmittelanschluß notwendig ist.

Außerdem ist aufgrund des sehr komplizierten Aufbaues dieser Vorrichtung die Montage und insbesondere auch die Auswechselbarkeit einzelner Messer aufwendig. Besonders nachteilig ist vor allem auch, daß zum Auswechseln eines einzelnen Teilmessers das Transportband angehalten und somit die Produktion unterbrochen werden muß.

Demgegenüber besteht die Aufgabe der Erfindung darin, eine Lösung zu schaffen, die mit möglichst einfachen Mitteln bei Gewährleistung einer einfachen Handhabbarkeit, insbesondere im Hinblick auf den Austausch von Teilmessern, eine optimale Stellung der jeweiligen Teilmesser gegenüber dem Transportband ermöglicht.

Diese Aufgabe wird mit einer Vorrichtung der eingangs bezeichneten Art erfindungsgemäß dadurch gelöst, daß im Messerhalter eine Kante zur drehbaren Lagerung der Teilmesser ausgebildet ist.

Durch diese Ausbildung wird auf besonders einfache Weise in Verbindung mit der Fixierung durch die Andrückschraube und das elastische Zwischenglied eine zur Abschabung optimale Stellung des jeweiligen Teilmessers gegenüber dem Transportband erzielt. Dabei ist gleichzeitig eine einfache Handhabbarkeit der Vorrichtung gewährleistet, wobei insbesondere auch der Austausch von Teilmessern ohne Unterbrechung der Bewegung des Transportbandes möglich ist.

Die Erfindung ist nachstehend anhand der Zeichnung beispielsweise näher erläutert. Diese zeigt in

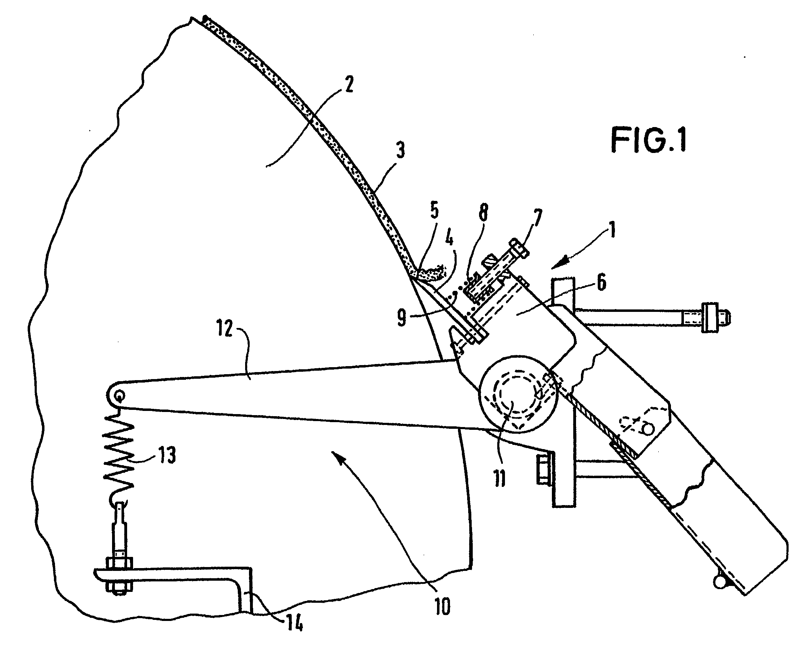

Fig. 1 in schematischer Darstellung eine Abschabevorrichtung, in
Fig. 2 beispielhaft ein Teilmesser der Vorrichtung, in
Fig. 3 dasselbe Teilmesser wie in Fig. 2 in einer Seitenansicht, in
Fig. 4 einen Messerhalter der Vorrichtung, in
Fig. 5 denselben Messerhalter wie in Fig. 4 in einer Seitenansicht mit einem Teilmesser.

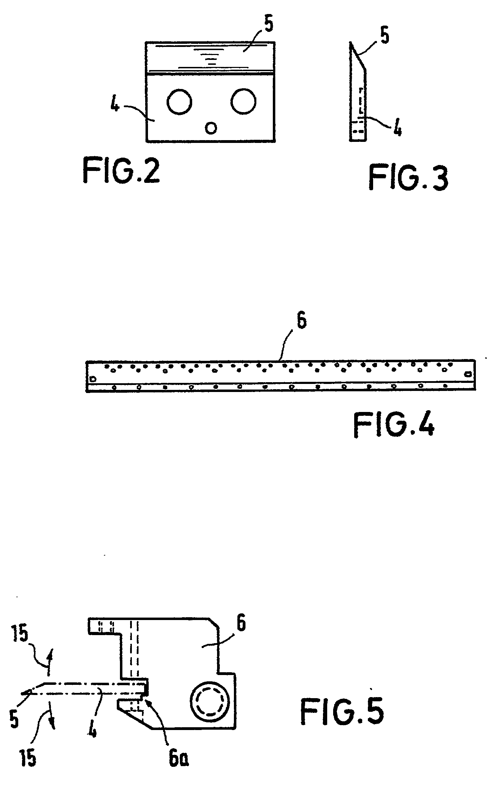

Eine Abschabevorrichtung 1 für einen auf einer Umlenkwalze 2 befindlichen, festen Stoff 3 weist eine Vielzahl von Teilmessern 4 mit einer Schneidkante 5 sowie einen Messerhalter 6 auf. Dabei ist im Messerhalter 6 eine Kante 6a zur drehbaren Lagerung (Pfeile 15, Fig. 5) der Teilmesser 4 ausgebildet. Jedes Teilmesser 4 ist über eine Andrückschraube 7, insbesondere Einstell-Knebelschraube, die über eine Aufnahmebuchse 8 und eine Spiralfeder 9 auf das Teilmesser 4 einwirkbar ist, justierbar. Es können auch zwei Andrückschrauben 7 und entsprechend zwei Aufnahmebuchsen 8 und Spiralfedern 9 für ein Teilmesser 4 vorgesehen sein.

Die Vorspannung des Messerhalters 6, und damit der Teilmesser 4, wird über ein Spannelement 10 bewirkt. Das Spannelement 10 weist eine drehfeste Verbindung 11 mit dem Messerhalter 6, einen Spannhebel 12, eine Spannfeder 13 und ein Befestigungselement 14 auf.

Die Wirkungsweise der Erfindung ist die folgende:

Die Vorrichtung 1 dient zum Abschaben des festen Stoffes 3 von der Umlenkwalze 2. Dazu werden die Teilmesser 4 nebeneinander in den Messerhalter 6 eingesetzt, wobei die Fixierung der Teilmesser 4 durch die Kante 6a und die Andrückelemente 7, 8, 9 erfolgt. Der Messerhalter 6 wird anschließend, wie bei bekannten Abschabevorrichtungen, mit Hilfe des Spannelementes 10 an der Walze 2 befestigt. Die Vorspannung der Messer 4 über den Messerhalter 6 erfolgt durch das Spannelement 10 über die Einstellung des Spannhebels 12 und der Spannfeder 13.

In diesem Zustand weisen alle Teilmesser 4 dieselbe Vorspannung auf. Zur Anpassung an die Oberfläche der Walze 2 werden anschließend alle Teilmesser 4 einzeln justiert. Diese Justierung erfolgt über die Andrückschrauben 7 und Spiralfedern 9, wobei durch das Anpressen eine entsprechende Drehung des jeweiligen Teilmessers 4 um die Kante 6a stattfindet. Dabei ist es besonders vorteilhaft, daß durch die Justierung eines Teilmessers 4 die benachbarten Messer in ihrem Anpreßdruck nicht beeinflußt werden. Die Teilmesser 4 sind derart nebeneinander im Messerhalter 6 angeordnet, daß zwischen den einzelnen Schneidkanten 5 der Messer 4 kein Zwischenraum verbleibt, so daß über der gesamten Breite der Umlenkwalze 2 eine Abschabung erfolgt.

Die Spiralfedern 9 gewährleisten eine elastische Lagerung der Teilmesser 4, so daß diese bei plötzlich auftretenden Abstandsänderungen zwischen Schneidkante 5 und Umlenkwalze 2 keinen Schaden nehmen. Da jedes Teilmesser 4 angepaßt an die jeweilige Walzenoberfläche 2 individuell eingestellt werden kann, kommt es nicht zu unterschiedlichen Belastungen entlang der Schneidkante 5. Außerdem hat sich herausgestellt, daß nach einmaliger Justierung der Teilmesser 4 praktisch keine Nachstellarbeiten notwendig sind, d.h. auch der Wartungsaufwand wird erheblich geringer.

Ist es trotzdem einmal notwendig, ein Teilmesser 4 auszuwechseln, so kann bei laufender Umlenkwalze 2 durch einfaches manuelles Lösen der entsprechenden Andrückschraube 7 das Teilmesser 4 entnommen und ein neues eingesetzt werden, wobei dann anschließend ein Wiederanziehen der Andrückschraube 7 notwendig ist.

In einem weiteren, in der Zeichnung nicht dargestellten Ausführungsbeispiel sind die Teilmesser 4 in zwei Ebenen hintereinander jeweils versetzt zueinander angeordnet. Dadurch entsteht im Bereich zwischen zwei Messern jeweils eine Überlappung, die eine vollständige Abtragung des festen Stoffes 3 von der Umlenkwalze 2 über der gesamten Breite gewährleistet.

Die Erfindung ist nicht auf das in der Zeichnung dargestellte Ausführungsbeispiel beschränkt. Weitere Ausgestaltungen sind möglich, ohne den Grundgedanken zu verlassen. So können anstelle der Spiralfedern auch andere elastische Zwischenglieder, wie Blattfedern, pneumatische Zylinder usw., zwischen Andrückschraube und Teilmesser eingesetzt werden. Auch kann es unter bestimmten Anwendungsbedingungen günstig sein, die Andrückschrauben ohne elastische Zwischenglieder direkt auf die Teilmesser wirken zu lassen.

**Patentansprüche**

1. Vorrichtung zum Abschaben fester Stoffe von einem Transportband mit einem aus einer Mehrzahl von nebeneinander in einem Messerhalter angeordneten, am Transportband mit veränderbarem Liniendruck anlegbaren Teilmessern gebildeten Schabmesser, wobei im Messerhalter für jedes drehbar gelagerte Teilmesser wenigstens ein auf dieses einwirkendes elastisches, federförmiges Zwischenglied mit Andrückschraube zur Einstellung des jeweiligen Teilmessers gegenüber dem Transportband angeordnet ist, dadurch gekennzeichnet, daß im Messerhalter (6) eine Kante (6a) zur drehbaren Lagerung (Pfeile 15) der Teilmesser (4) ausgebildet ist.

**Claims**

An arrangement for scraping solid materials from a conveyor belt comprising a scraper blade formed by a plurality of component blades which are arranged adjacent one another in a blade holder and which are designed to be applied to the conveyor belt under variable linear pressure, at least one spring-like intermediate element with a pressure screw being provided in the blade holder for each rotatably mounted component blade and acting thereon to adjust the particular component blade relative to the conveyor belt, characterized in that an edge (6a) is formed in the blade holder (6) for the rotatable mounting (arrows 15) of the component blades (4).

**Revendications**

Dispositif racleur pour enlever la matière adhérant à un convoyeur à bande à l'aide d'un couteau racleur formé d'un grand nombre de couteaux partiels disposés les uns contre les autres dans un porteur à couteaux, que l'on peut disposer sur le convoyeur à bande avec une pression de régulation variable dans lequel dans le porteur à couteaux pour chaque couteau partiel installé rotatif au moins une pièce intermédiaire en forme de ressort, élastique, agissant sur celui-ci avec des vis de réglage pour l'ajustement du couteau partiel correspondant, est disposée face au convoyeur à bande, dispositif caractérisé en ce qu'une arête (6a) est formée sur le porteur à couteaux (6) pour l'installation tournante (flèche 15) du couteau partiel (4).

FIG.1

EP 0 306 719 B1

FIG.2

FIG.3

FIG.4

FIG.5